# EUROPEAN PATENT APPLICATION

(11) **EP 1 971 147 A2**
(43) Date of publication of application: **17.09.2008**
(21) Application number: 07121195.7
(22) Date of filing: 21.11.2007
(51) Int. Cl.: H04N 7/24

(54) **Method and DVB-H reception terminal for efficiently receiving broadcasting data**

(30) Priority: 21.11.2006 KR 20060115090
(71) Applicant: Samsung Electronics Co., Ltd., Suwon-si, Gyeonggi-Do (KR)
(72) Inventor: Kim, Hyung-Hoon, Gyeonggi-do (KR)
(74) Representative: Grünecker, Kinkeldey, Stockmair & Schwanhäusser Anwaltssozietät

(57) **Abstract**

Disclosed is a method for efficiency receiving Electronic Service Guide (ESG) data in a Digital Video Broadcasting-Handheld (DVB-H) reception terminal. After transmission information regarding containers carrying ESG data is received in advance, a determination is made as to whether the container is corrupted on the basis of the transmission information upon reception of the containers. The container information is used to selectively receive only a corrupted container or to prevent a container from being redundantly received. The DVB-H reception terminal not only can efficiently receive the ESG data according to need, but also can significantly improve its reception scheme.

## Description

The present invention generally relates to a Digital Video Broadcasting-Handheld (DVB-H) reception terminal, and in particular, to a method and DVB-H reception terminal for efficiently receiving broadcasting data.

Digital Video Broadcasting-Handheld (DVB-H) is a technical standard established to improve a reception rate of a terrestrial Digital Television (DTV) on the move in Europe. DVB-H technology can implement mobile multimedia broadcasting that provides high-quality voice and video services anytime and anywhere, even when users are driving or walking, for example.

Using DVB-H technology, a service model has the following structure. First, a transmitting stage is constructed with a network interactive with a broadcast provider and a communication provider according to DVB-Universal Mobile Telecommunications Service (UMTS) standard. The broadcast provider provides a DVB-H reception terminal (terminal) with compressed data in a DVB-H transmission scheme on the basis of a DVB-Audio Visual Content (AVC) standard. The terminal communicates with a mobile communication provider in a communication standard such as DVB-UMTS/Global System for Mobile communications (GSM) and the like, and also provides the broadcast provider with information regarding a receiving side through a communication network in real time.

On the other hand, broadcast related information is mostly included in an Electronic Service Guide (ESG) in a DVB-H system. In this case, a user may select a TV channel or a radio channel of interest through the ESG or may select an item to be downloaded. The ESG provides information for connecting the terminal to a specific Internet Protocol (IP) stream within a DVB-H transport stream. An operation for processing ESG data is divided into the following three processes.

Specifically, the three processes are classified into an ESG bootstrapping process in which the terminal detects types of ESG data capable of being received and detects how to acquire ESG data, an ESG acquisition process in which the terminal collects and processes ESG data, and an ESG update process in which the terminal stores a latest version of ESG data.

In this system, the terminal can receive broadcasting data using a File Delivery over Unidirectional Transport (FLUTE) carousel scheme. This is a scheme in which the terminal receives ESG data when a DVB-H transmission server continuously cyclically broadcasts the ESG data over the air.

This terminal may provide a digital broadcasting service only when constantly receiving the ESG data. While the terminal receives data required to execute the digital broadcasting service, a service disconnection may occur due to many factors. However, as the amount of ESG data increases when the ESG data is transmitted in a multiple-stream scheme, the efficiency of a reception scheme in the terminal decreases and a data processing time increases in the terminal. As such, an ESG data transmission method is needed which can improve overall Quality of Service (QoS).

In a conventional Digital Video Broadcasting-Handheld (DVB-H) system using a multiple-stream mode as described above, a terminal should wait until a DVB-H transmission server re-transmits Electronic Service Guide (ESG) data when the ESG data is not received. The terminal should receive all ESG data from the beginning without receiving only corrupted ESG data, even when the reception of the ESG data is resumed.

The present invention has been designed to address at least the above problems and/or disadvantages and to provide at least the advantages described below. Accordingly, the object of the present invention is to provide a method and DVB-H reception terminal for efficiently receiving ESG data broadcast from a DVB-H transmission server.

This object is solved by the subject matter of the independent claims.

Preferred embodiments are defined in the dependent claims.

An aspect of the present invention is to provide a method and DVB-H reception terminal for efficiently receiving ESG data broadcast from a DVB-H transmission server that can improve a reception rate by selectively receiving the ESG data broadcast from the DVB-H transmission server.

According to another aspect of the present invention, there is provided a method for efficiently receiving broadcasting data in a DVB-H reception terminal. The method includes receiving table information constructed with information regarding transmission of multiple containers carrying ESG data; accumulating and storing information regarding a received container whenever the container carrying ESG data is received; comparing the table information with the accumulated container information; and detecting and receiving a reception target container when the table information is different from the accumulated container information in a comparison result.

According to yet another aspect of the present invention, there is provided a DVB-H reception terminal for efficiently receiving broadcasting data. The terminal includes a digital broadcasting receiver for receiving table information constructed with information regarding a transmission of multiple containers carrying ESG data and the containers carrying the ESG data; a memory for storing accumulated information regarding the received containers; and a controller for accumulating and storing information regarding a received container whenever the container carrying ESG data is received by the digital broadcasting receiver, comparing the table information with the container information accumulated in the memory and controlling the digital broadcasting receiver to receive a reception target container by detecting the reception target container when the table information is different from the accumulated container information according to a comparison result.

The above and other features and advantages of the present invention will be more apparent from the following detailed description taken in conjunction with the accompanying drawings, in which:
FIG. 1 illustrates the reception of Container Information Table (CIT) information in an Electronic Service Guide (ESG) bootstrap step in accordance with an exemplary embodiment of the present invention;
FIG. 2 is an internal block diagram illustrating a Digital Video Broadcasting-Handheld (DVB-H) reception terminal in accordance with an exemplary embodiment of the present invention;
FIG. 3 illustrates a structure of the CIT information in accordance with an exemplary embodiment of the present invention; and
FIGS. 4 and 5 are flow diagrams illustrating a control process for receiving a container using the CIT information in accordance with an exemplary embodiment of the present invention.

Exemplary embodiments of the present invention will be described in detail herein below with reference to the accompanying drawings. Descriptions of well-known functions and constructions are omitted for clarity and conciseness.

Preferably, the present invention provides a method for efficiently receiving Electronic Service Guide (ESG) data in a Digital Video Broadcasting-Handheld (DVB-H) reception terminal. According to one exemplary embodiment of the present invention, a determination is made as to whether a container is corrupted on the basis of transmission information upon reception of containers after the transmission information regarding the containers carrying ESG data is received in advance. The container information is then used to selectively receive only a corrupted container or to prevent a container from being redundantly received. The DVB-H reception terminal not only can efficiently receive the ESG data according to need, but also can significantly improve its reception scheme.

For convenience, an ESG transmission structure will be described below. Moreover, a process of the DVB-H reception terminal for efficiently receiving the ESG data in accordance with exemplary embodiments of the present invention will also be described.

Upon receiving an ESG stream, the DVB-H reception terminal acquires mandatory information required to receive a service from a DVB-H transmission server, that is, a service provider. When a user selects a specific service, the terminal receives data after accessing a data stream in which the service is provided using the acquired information. Information for accessing a service data stream from the terminal is transmitted in an ESG fragment.

Several ESG data models are tied on a fragment-by-fragment basis and are contained in one container. The container is transmitted which is regarded as one object in a File Delivery over Unidirectional Transport (FLUTE) session, i.e., a data session.

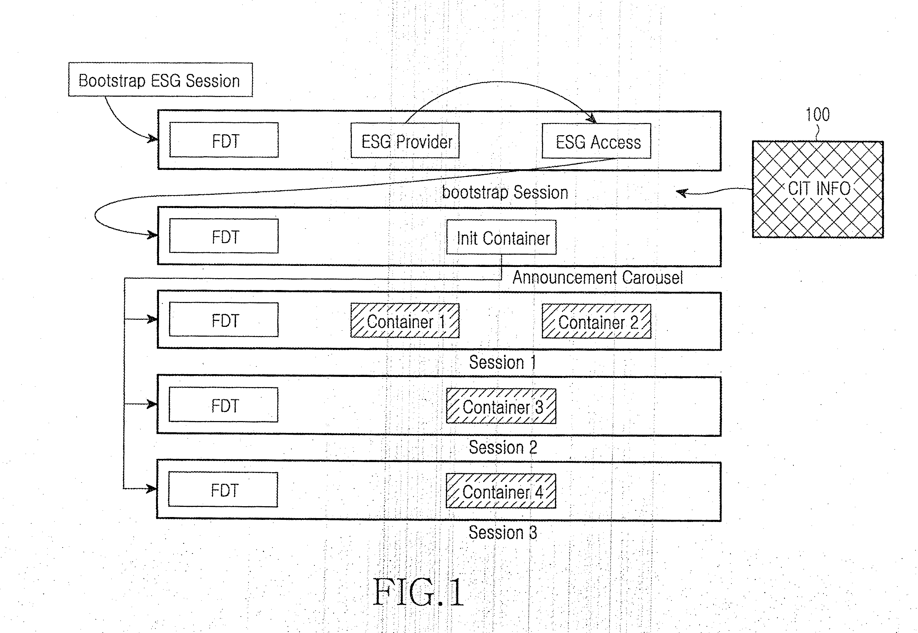

In an ESG multiple-stream transport mode, ESG containers are transmitted in at least three sessions (Session 1, Session 2 and Session 3) as illustrated in FIG. 1. The ESG bootstrap session indicates an ESG Announcement Carousel FLUTE session that gives notification of session information and the number of sessions in which actual ESG containers are transmitted.

In FIG. 1, the DVB-H transmission server reports channel information of an ESG bootstrap session for transmitting ESG data, that is, a path, to the DVB-H reception terminal. When accessing a channel based on the channel information, the terminal receives bootstrap information. The bootstrap information is configured with an ESG provider descriptor and an ESG access descriptor. In the ESG provider descriptor, information regarding an identifier (ID), name and logo of an ESG provider, and the like, is transported. In the ESG access descriptor, information regarding ESG Announcement Carousel, IP addresses and the number of IP sessions in which an ESG is transmitted is transported.

In ESG Announcement Carousel, ESG Init Container and ESG Index Containers are transported. ESG Init Container contains an option of a decoder for decoding an ESG, Partition Declaration, Index List and Index Structure.

ESG data has broadcast service information and is transmitted to the DVB-H reception terminal using a special IP stream at a time different from that of an actual data stream. Upon receiving this ESG model, the DVB-H reception terminal acquires information required to receive a service from the DVB-H transmission server. When the user selects a specific service, the DVB-H reception terminal receives data after accessing a data stream in which the service is provided using the acquired information.

According to one exemplary embodiment of the present invention, an operation is performed according to container corruption or addition using container information when the DVB-H reception terminal receives, in advance, information regarding containers created by the DVB-H transmission server and receives containers carrying ESG data. Information regarding a transmission of multiple containers carrying the ESG data in accordance with an exemplary embodiment of the present invention has a table form. Container Information Table (CIT) information is transmitted from the DVB-H transmission server before the DVB-H reception terminal acquires actual ESG data. In this case, the CIT information 100 can be received in an ESG bootstrapping step, as illustrated in FIG. 1. Preferably, the CIT information 100 is transmitted before the DVB-H reception terminal accesses a data session in which containers are included.

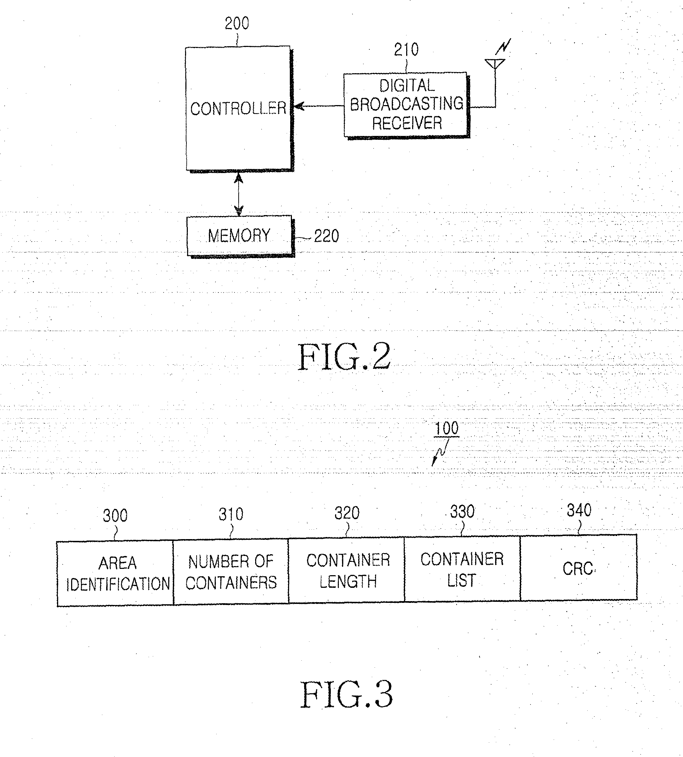

Next, the components of the DVB-H reception terminal and their operations will be described with reference to FIG. 2. In FIG. 2, the DVB-H reception terminal is provided with a controller 200, a digital broadcasting receiver 210 and a memory 220.

First, the digital broadcasting receiver 210 receives a transport stream and CIT information from a service provider, that is, a DVB-H transmission server, through a DVB-H network. Then, the digital broadcasting receiver 210 outputs the received transport stream and the received CIT information to the controller 200. That is, the digital broadcasting receiver 210 receives table information constructed with information regarding a transmission of multiple containers carrying ESG data and the containers carrying the ESG data. When a transport packet is received, a process for parsing video and audio data through a decoding process after demultiplexing the transport packet can be implemented inside the controller 200. Since the operations of the internally implemented components are obvious to those skilled in the art, a detailed description is omitted.

On the other hand, the controller 200 processes voice signals and data according to protocol for wireless Internet access and digital broadcasting, and controls the components of the DVB-H reception terminal. In particular, when the user executes a broadcast service, the controller 200 receives an ESG bootstrap session through the digital broadcasting receiver 210 in accordance with an exemplary embodiment of the present invention. The controller 200 stores the CIT information in the memory 220 after receiving the CIT information through the digital broadcasting receiver 210 in the step of receiving the ESG bootstrap session.

Upon receiving the ESG bootstrap session, the controller 200 decodes an announcement carousel in a multiple-stream mode. Specifically, ESG data transmission starts when the ESG bootstrap session is received. The bootstrap session includes an ESG provider descriptor and an ESG access descriptor. The ESG access descriptor has information of the announcement carousel session. When Init Container is received by detecting the announcement carousel session, Partition Declaration information is included in Init Container. The controller 200 can detect a session including containers in which the actual ESG data is transmitted by reading the Partition Declaration information.

Thus, the controller 200 receives all the containers containing the ESG data. Whenever one container is acquired, the controller 200 performs a counting process by accumulating the number of containers, a container length, a container list and a Cyclic Redundancy Checking (CRC) value to specific parameters. This accumulated container information needs to be compared with the CIT information. The controller 200 compares the CIT information with the accumulated information related to the received containers after receiving all the containers. If the CIT information is equal to the accumulated information as the comparison result, the controller 200 determines that the containers transmitted from the DVB-H transmission server are normally received. Thus, the controller 200 can estimate the actual ESG data by parsing the received containers.

If the CIT information is different from the accumulated information as the comparison result, the controller 200 determines that some containers are not normally received due to an external environment. The controller 200 receives only required containers by determining which container is corrupted or is to be added. The controller 200 detects and receives a reception target container. For this, when the CIT information is different from the accumulated information as the comparison result, the controller 200 stores the latest received container list of the accumulated container information and the latest received CIT information and then uses the latest received container list and the latest received CIT information to receive only a required container thereafter. How to detect only a required container will be described below.

On the other hand, the memory 220 stores information related to broadcast service provision included in containers, for example, ESG data, if the received containers are normally received without corruption simultaneously when information related to the overall functions of the DVB-H reception terminal is stored. Further, the memory 220 stores the accumulation information for the received containers. A special area for storing CIT information created by the DVB-H transmission server is assigned to the memory 220.

The CIT information 100 has a structure as illustrated in FIG. 3. The CIT information 100 is provided with an "area identification" field 300, a "number of containers" field 310, a "container length" field 320, a "container list" field 330 and a "CRC" field 340. A service area code is set to the "area identification" field 300 for indicating a service area of the service provider. The total number of containers to be transmitted is set to the "number of containers" field 310. The length of each container to be transmitted is set to the "container length" field 320. A list of names of the containers to be transmitted is set to the "container list" field 330. A CRC value for checking the integrity of the containers to be transmitted is set to the "CRC" field 340.

In a structure of the above-described CIT information, information of one CIT is created with the same structure as when the service area or service provider is changed. When n service areas are present, information of n CITs is created. When the service provider is changed and a new structure of CIT information is created, previous CIT information is stored in a nonvolatile memory of the memory 220. The reason why the previous CIT information is stored is that the same CIT information is later re-used.

Next, how to use CIT information received by the DVB-H reception terminal from the DVB-H transmission server in accordance with the present invention will be described.

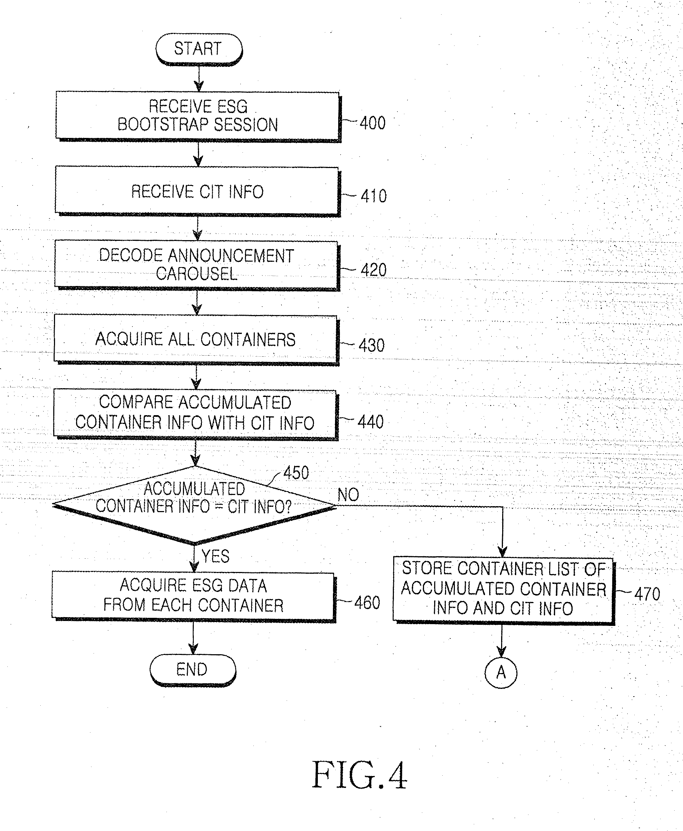

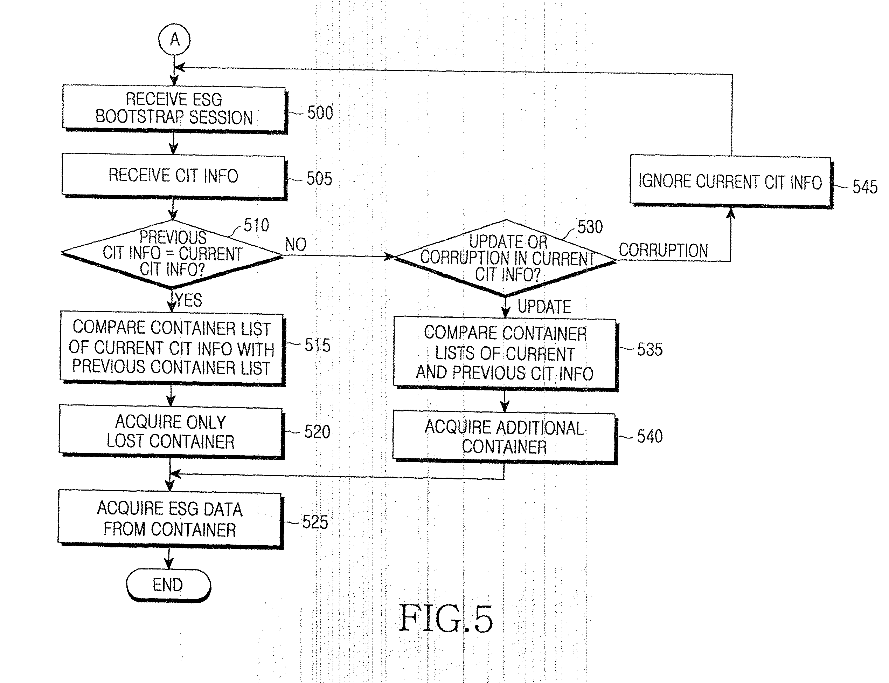

FIGS. 4 and 5 are a flow diagram illustrating a control process for receiving a container using the CIT information in accordance with an exemplary embodiment of the present invention.

In FIG. 4, the DVB-H reception terminal receives an ESG bootstrap session to receive actual ESG data when the user executes a broadcast service in step 400. After the step of receiving the ESG bootstrap session, the DVB-H reception terminal receives CIT information in step 410. The CIT information is transmitted from the DVB-H transmission server to the DVB-H reception terminal before the actual ESG data is received. Herein, the CIT information indicates an information table related to a transmission of multiple containers with the ESG data.

On the other hand, the DVB-H reception terminal starts to decode the ESG bootstrap session while receiving the session. The DVB-H reception terminal acquires information for receiving the ESG data through a decoding process. The DVB-H reception terminal receives and decodes an announcement carousel session in step 420. Then, the DVB-H reception terminal decodes an ESG initial container within the announcement carousel session and detects a container included in each session. The DVB-H reception terminal starts to acquire all containers with the ESG data in step 430.

At this time, the DVB-H reception terminal accumulates and counts the number of received containers, a container length, a container list and a CRC value while acquiring the containers. After receiving all the containers, the DVB-H reception terminal compares the counted accumulated container information with the CIT information in step 440. The accumulated information related to the received containers and the CIT information are compared on an element-by-element basis. Thus, the total number of containers, the container length, the container list and the CRC value based on the accumulated information are compared with "number of containers", "container length", "container list" and "CRC" fields constructing the CIT information, respectively.

Through the comparison process, the DVB-H reception terminal determines whether the accumulated information is equal to the CIT information in step 450. If the accumulated information is determined to be equal to the CIT information, the DVB-H reception terminal determines that all the containers have been normally received without corruption. In step 460, the DVB-H reception terminal starts to acquire actual ESG data from each container. In other words, if the accumulated information is determined to be equal to the CIT information, the DVB-H reception terminal turns off a processor for receiving containers. The DVB-H reception terminal performs an operation for extracting ESG data by parsing the received containers.

However, if the accumulated information is determined to be different from the CIT information in step 450, the DVB-H reception terminal proceeds to step 470 to store a container list of the accumulated container information and the CIT information. Since some containers are not normally received due to a variation in an external environment if the accumulated container information is different from the CIT information as the comparison result, the memory 220 of the DVB-H reception terminal stores the latest received CIT information and the Latest Received Container List (LRCL) to be later used for acquiring a corrupted container. The DVB-H reception terminal proceeds to step 500 of FIG. 5. A symbol "A" is used for a connection between steps 470 and 500 of FIGS. 4 and 5.

After receiving all the containers, the DVB-H reception terminal determines whether part of the received containers is not normally received on the basis of CIT information acquired in the initial bootstrap step.

If a container is not normally received, the DVB-H reception terminal needs to receive only a lost container excluding redundant containers. When an additional container is transmitted from the DVB-H transmission server, the DVB-H reception terminal should receive the additional container.

For this, the DVB-H reception terminal again receives the ESG bootstrap session in step 500. After the step of receiving the ESG bootstrap session is entered, the DVB-H reception terminal proceeds to step 505 to again receive new CIT information from the DVB-H transmission server. Then, the DVB-H reception terminal determines whether previously stored CIT information is equal to current new CIT information in step 510. Herein, the previous CIT information is the latest CIT information previously stored. If the previous CIT information is determined to be equal to the current CIT information, the DVB-H reception terminal proceeds to step 515 to compare the current CIT information with the LRCL previously stored. Through this comparison, the DVB-H reception terminal can determine which reception target or container is lost in a list of all containers. The DVB-H reception terminal acquires only a lost container in step 520 and acquires ESG data from the container in step 525.

In this case, a part or a whole of data within an associated container may be different from CIT information of the container, but the previously received and stored CIT information may be equal to the currently newly received CIT information. When the whole of the container is not actually received although the previous CIT information is equal to the current CIT information, the following situation occurs. There is no problem in receiving the CIT information, but some containers may not be received in middle course, or corrupted data may be received.

Although the CIT information is received from the DVB-H transmission server when an environmental situation is good, that is, only the CIT information is normally received, the remaining data may not be normally received due to the degradation of electronic wave reception capability in the DVB-H reception terminal. Thus, the current CIT information should be compared with the previous container list once more even though the previous CIT information is equal to the current CIT information. Although the CIT information is determined to be normal, the previous container list may include some lost containers. Thus, a list is re-received due to a difference between the previous container list and the container list of the current CIT information. The re-received list indicates the lost containers. Using the re-received list, the DVB-H reception terminal can re-receive only containers incapable of being analyzed since data is absent or corrupted in the containers.

If the previous CIT information is determined to be different from the current CIT information in step 510, the DVB-H reception terminal proceeds to step 530 to determine whether the current CIT information is updated or corrupted. When the current CIT information is updated or corrupted, the previous CIT information can be different from the current CIT information. The following processes are required in the above-described cases.

First, the DVB-H reception terminal determines whether a changed field is present in information of two CITs in order to determine whether the current CIT information is corrupted. The current CIT information newly received can be corrupted as in step 530 of FIG. 5. The previous CIT information can also be corrupted. Specifically, the DVB-H reception terminal determines which field value is changed among the "area identification", "number of containers", "container length", "container list" and "CRC" fields. If a changed field is absent and only a value of the "CRC" field is different, it is determined that some data is corrupted. The "CRC" field is used to ensure the integrity of the fields.

Alternatively, CIT_CRC can be added to CIT information constructed with "area identification", "number of containers", "container length", "container list" and "CRC" fields and the like, such that a determination is made as to whether the CIT information itself is corrupted data, that is, the CIT information is integral. When a value of the "CRC" field of the fields constructing a CIT is compared with a "CIT_CRC" value, a determination can be made as to whether the CIT information is corrupted. The DVB-H reception terminal can determine whether the previous CIT information as well as the current CIT information is integral.

Upon determining that the previous or current CIT information is corrupted in step 530, the DVB-H reception terminal proceeds to step 545 to ignore the current CIT information, and returns to step 500 to again receive CIT information. Thus, the DVB-H reception terminal updates the fields constructing CIT information stored in the memory 220 on the basis of new CIT information.

On the other hand, a determination is made as to whether a container list of the current CIT information is different from that of the previous CIT information in order to determine whether the current CIT information is updated. If the container list of the current CIT information is determined to be different from that of the previous CIT information, the DVB-H reception terminal determines that the current CIT information is updated. Upon determining that the current CIT information is updated in step 530, the DVB-H reception terminal proceeds to step 535 to compare container lists of the current and previous CIT information. The container lists are compared to detect another container list without corrupted data from the container list of the current CIT information in the information of two CITs.

If another container list is present in the container list of the current CIT information among all the container lists, it is determined that a container has been added. In step 540, only the added container is acquired. When the added container is detected and acquired, the DVB-H reception terminal proceeds to step 525 to acquire ESG data from the added container.

On the other hand, in accordance with another exemplary embodiment of the present invention, the DVB-H reception terminal can detect an area where ESG data is currently received through already received CIT information. When the DVB-H reception terminal re-visits a previously visited area, it is efficient to re-use the ESG data previously used in the area. This operation is performed in the following sequence. It is assumed that the associated containers are stored in the nonvolatile memory whenever new ESG data is received.

For example, when moving to a previously visited "A" area while receiving and employing ESG data in a "B" area, the DVB-H reception terminal should receive CIT information in the "A" area. After comparing the CIT information of the "A" area with area identification information of the stored CIT information, "number of containers" and "CRC" fields of the CIT information are compared if the same CIT is detected. Containers are re-received only when the fields are different from each other as the comparison result. However, when the fields are the same as each other, already stored containers can be re-used, and therefore, ESG data can be re-used.

As described above, the present invention can detect and receive only lost containers even when some containers are lost due to external environment and the like. Moreover, the present invention can detect and receive only an additional container even when the additional container is present in middle course after the containers are received.

In accordance with yet another exemplary embodiment of the present invention, a DVB-H reception terminal can receive only required containers upon reception of broadcasting data, thereby improving a reception rate. Although the DVB-H reception terminal moves to many areas, containers stored in the DVB-H reception terminal can be re-used since previous area information is stored. Therefore, a redundant operation can be avoided and also ESG data can be efficiently received.

While the invention has been shown and described with reference to certain exemplary embodiments of the present invention thereof, it will be understood by those skilled in the art that various changes in form and details may be made therein without departing from the scope of the present invention as defined by the appended claims.

## Claims

1. A method for efficiently receiving broadcasting data in a Digital Video Broadcasting-Handheld, DVB-H, reception terminal, comprising:
receiving table information constructed with information regarding a transmission of multiple containers carrying Electronic Service Guide, ESG, data;
accumulating and storing information regarding a received container whenever the container carrying ESG data is received;
comparing the table information with the accumulated container information; and
detecting and receiving a reception target container when the table information is different from the accumulated container information according to a comparison result.

2. The method of claim 1, wherein the table information comprises an area identification field for identifying a service area, a number of containers field for indicating the total number of containers to be transmitted, a container length field for indicating a length of each of the containers to be transmitted and a Cyclic Redundancy Checking, CRC, field for checking integrity of the containers to be transmitted, and
the accumulated container information mapped to a structure of the table information comprises the number of received containers, a container
length, a container list and a CRC value.

3. The method of claim 2, further comprising:
storing the table information and the container list of the accumulated container information when the table information is different from the accumulated container information as the comparison result.

4. The method of claim 3, wherein detecting and receiving the reception target container comprise:
receiving new table information;
comparing the new table information with stored previous table information;
comparing a container list of the new table information with the stored container list of the accumulated container information when the new table information is equal to the stored previous table information; and
receiving a lost container detected through a comparison between the lists.

5. The method of claim 4, further comprising:
determining whether one of the new table information and the previous table information is corrupted when the new table information is different from the previous table information; and
ignoring the new table information when the one of the new table information and the previous table information is determined to be corrupted
and again receiving new table information.

6. The method of claim 5, further comprising:
determining whether the new table information is updated when the corrupted table information is determined to be absent;
comparing the container list of the new table information with a container list of the previous table information when the new table information is determined to be updated; and
receiving an additional container detected through a comparison between the lists.

7. A Digital Video Broadcasting-Handheld, DVB-H, reception terminal for efficiently receiving broadcasting data, comprising:
a digital broadcasting receiver for receiving table information constructed with information regarding a transmission of multiple containers carrying Electronic Service Guide, ESG, data and the containers carrying the ESG data;
a memory for storing accumulated information regarding the received containers; and
a controller for accumulating and storing information regarding a received container whenever the container carrying ESG data is received by the digital broadcasting receiver, comparing the table information with the container information accumulated in the memory and controlling the digital broadcasting receiver to receive a reception target container by detecting the reception target container when the table information is different from the accumulated container information according to a comparison result.

8. The DVB-H reception terminal of claim 7, wherein the table information comprises an area identification field for identifying a service area, a number of containers field for indicating the total number of containers to be transmitted, a container length field for indicating a length of each of the containers to be transmitted and a Cyclic Redundancy Checking, CRC, field for checking integrity of the containers to be transmitted, and
the accumulated container information mapped to a structure of the table information comprises the number of received containers, a container length, a container list and a CRC value.

9. The DVB-H reception terminal of claim 8, wherein the controller stores the table information and the container list of the accumulated container information in the memory when the table information is different from the accumulated container information according to a comparison result.

10. The DVB-H reception terminal of claim 9, wherein the controller receives new table information when the table information is different from the accumulated container information as the comparison result, compares the new table information with stored previous table information, compares a container list of the new table information with the stored container list of the accumulated container information when the new table information is equal to the stored previous table information, and controls a process for receiving only a lost container by detecting the lost container through a comparison between the lists.

11. The DVB-H reception terminal of claim 10, wherein the controller determines whether one of the new table information and the previous table information is corrupted when the new table information is different from the previous table information, ignores the new table information when the one of the new table information and the previous table information is determined to be corrupted, and controls a process for again receiving new table information.

12. The DVB-H reception terminal of claim 11, wherein the controller determines whether the new table information is updated when corrupted table information is determined to be absent, compares the container list of the new table information with a container list of the previous table information when the new table information is determined to be updated, and controls a process for receiving only an additional container by detecting the additional container through a comparison between the lists.
